Europäisches Patentamt

European Patent Office

Office européen des brevets

(11) Publication number: **0 426 259 A2**

# EUROPEAN PATENT APPLICATION

(21) Application number: 90202888.5

(51) Int. Cl.5: **B65G 57/04**, B21D 43/22

(22) Date of filing: 31.10.90

(30) Priority: 06.04.90 NL 9000813

(43) Date of publication of application:
08.05.91 Bulletin 91/19

(84) Designated Contracting States:
AT BE CH DE DK ES FR GB GR IT LI LU NL SE

(71) Applicant: Walker-Hagou B.V.
Industrieweg 9
NL-5531 AD Bladel(NL)

(72) Inventor: Bijl, Roy
Hobbel 8
NL-5561 TN Riethoven(NL)

(74) Representative: Metman, Karel Johannes et al
Octrooibureau Los en Stigter B.V. P.O.Box
20052
NL-1000 HB Amsterdam(NL)

(54) **Apparatus for conveying and depositing articles.**

(57) An apparatus for conveying and depositing articles (1), in particular metal sheets, comprises a conveyor (4) supported by a frame (3) and having a conveying part (5A) for conveying articles supplied thereto. At a lower level than the conveying part (5A), a deposite place for receiving articles delivered by the conveyor (4) is arranged. The conveyor (4) includes magnet means (11, 12) to cause the articles (1) to adhere to the underside of the conveyor (4) in the conveying part (5A) thereof, and means for releasing the articles (1) from the conveyor (4) above the deposite place.

fig.1

## APPARATUS FOR CONVEYING AND DEPOSITING ARTICLES

The invention relates to an apparatus for conveying and depositing articles, in particular metal sheets, comprising a conveyor supported by a frame and having a conveying part for conveying articles supplied thereto and, at a lower level than the conveying part, a deposite place for receiving articles delivered by the conveyor.

In a known apparatus of this type the conveyor consists of a conveyor belt on the end of which a deposite place is arranged, said deposite place receiving, in the form of a stack, articles delivered at the end of the conveyor belt. This apparatus has the disadvantage that each delivered metal sheet slides over the upper metal sheet of the stack on the deposite place which possibly causes damages thereto. Furthermore, it is impossible to obtain an accurate stacking of the articles so that the stack is unsuited to be supplied directly to a further automatic handling or tooling apparatus.

A further known apparatus includes as conveyor a roller conveyor having a plurality of downwardly swingable rollers above the deposite place in order to drop the articles on the deposite place. This apparatus has the disadvantage of an inherent great height of drop, which also may cause damage to the articles and an inaccurate positioning thereof. The swingable rollers also limit the size of articles to be handled. Then, large articles cannot pass and also several adjacent small strips cannot be handled.

It is an object of the invention to provide an apparatus of the type mentioned in the preamble, wherein the disadvantages described above are removed in an effective way.

For this purpose the apparatus for conveying and depositing articles according to the invention is characterized in that the conveyor includes magnet means to cause articles to adhere to the underside of the conveyor in the conveying part thereof, and means for releasing articles from the conveyor above the deposite place.

Due to the fact that the articles are below the conveyor the deposit thereof is much easier. It is now only necessary to position the articles above the deposite place, which may be effected in a very accurate manner, whereafter the articles are deposited on the deposite place by releasing them from the conveyor. The height of drop of the articles may be very small or even zero so that damages and inaccuracies in the position caused by the drop will be negligible or even absent.

In a simple embodiment of the apparatus according to the invention the conveyor comprises a belt conveyor having at least one endless conveyor belt.

In this case, the articles adhere to the lower conveying part of the conveyor belt. Due to the continuity of the conveyor belt all kinds of articles having a arbitrary spacing can be conveyed.

It would of course also be possible to make the conveyor belt magnetic itself, but according to the invention it is more simple when the magnet means consist of magnets mounted to the frame and being situated above the conveying part of the belt conveyor.

In this way the magnets magnetize the articles through the conveyor belt. Due to this feature it is further possible to provide different kinds of magnets on different places.

In this embodiment it may be realized in a simple manner that the means for releasing the articles from the conveyor above the deposite place comprise switching means for switching-off the magnet means constructed as switchable magnets and being situated above the deposite place.

In this embodiment the switchable magnets should be arranged with such size and distribution that it is possible to release the smallest expected articles separately. When small magnets are used a group of magnets should be switched simultaneously when larger articles are handled.

As switchable magnets electric magnets may be used for instance, or it may be advantageous to use so called pneumatic switchable magnets, wherein permanent magnets are movably arranged under a stainless steel cap such that the external magnetic field is adjustable.

As an alternative the means for releasing the articles from the conveyor above the deposite place consist of push-off means which are displaceable between a retracted position above the conveying part of the conveyor and an extended position in which the push-off means project below the conveying part.

In this case the magnet means may be chosen freely. For releasing the articles of different sizes different push-off means or different groupes of push-off means can be operated.

Preferably, the push-off means are mounted to the frame of the conveyor on both sides of the conveyor belt.

As a consequence the push-off means are adapted to operate totally independent of the position of the conveyor belt. Of course the articles should then project on either side of the conveyor belt.

For this reason, particularly in this embodiment, it is favourable when a plurality of parallel narrow conveyor belts are aligned transverse to the direction of conveyance.

To deposit articles on a stack of articles on the deposite place in an accurate way without damages thereto it is an advantage when the deposite place is formed on a vertically adjustable lift preferably including a conveying means, in particular a belt conveyor, which is movable transverse to the direction of conveyance, wherein the height of the deposite place is controllable in dependence on the height of the stack of articles thereon.

In this manner the distance between the upperside of a stack of articles arranged on the deposite place and the underside of an article to be deposited may be kept constant. In case of the embodiment having push-off means this distance is preferably such that the article to be deposited is pushed on to the stack just outside the magnetic field of the magnet means so that the article is still under influence of the magnetic field and hence its accurate horizontal position will be maintained until it is deposited on the stack.

Due to the presence of a conveying means on the lift it is possible that a completed stack of articles is directly conveyed furtheron and, for example, transferred to a conveyor connecting to the lift and adapted to convey the stack of articles to a following handling or tooling apparatus.

Preferably a further belt conveyor includes a conveyor belt having its own drive and cooperating with said first belt conveyor such that articles are allowed to be transferred from one belt conveyor to the other.

Due to this feature it is possible to make the supply of articles to the conveyor, for instance from a tooling apparatus such as a plate shears machine, independent of the discharge of the articles by depositing them on the deposite place.

The transfer of the articles from one conveyor belt sto the other can take place one-by-one, such as with two connecting conveyor belts having magnet means and being aligned in the direction of conveyance, but it can also take place per group of articles.

This latter can be realized in accordance with the invention by means of an apparatus which is characterized in that the further belt conveyor is arranged at least partially under said belt conveyor having magnet means and at least one of the belt conveyors being adjustable in vertical direction such that the upper conveying part of the lower belt conveyor is allowed to contact the lower conveying part of the upper belt conveyor having magnet means.

The invention will hereafter be elucidated with reference to the drawing schematically showing an embodiment of the apparatus according to the invention by way of example.

Fig. 1 is a schematic side view of an embodiment of the apparatus for conveying and depositing articles according to the invention.

Fig. 2 is an enlarged fragmentary sectional view along the line II-II in fig. 1.

The drawing shows an embodiment of an apparatus for conveying and depositing articles, and in this case for conveying and stacking metal sheets 1 which have just been cut from a metal strip in a plate shear 2. Of course it would also be possible to handle other articles, and in particular substantially flat articles, in the apparatus provided that they are magnetizable in some manner.

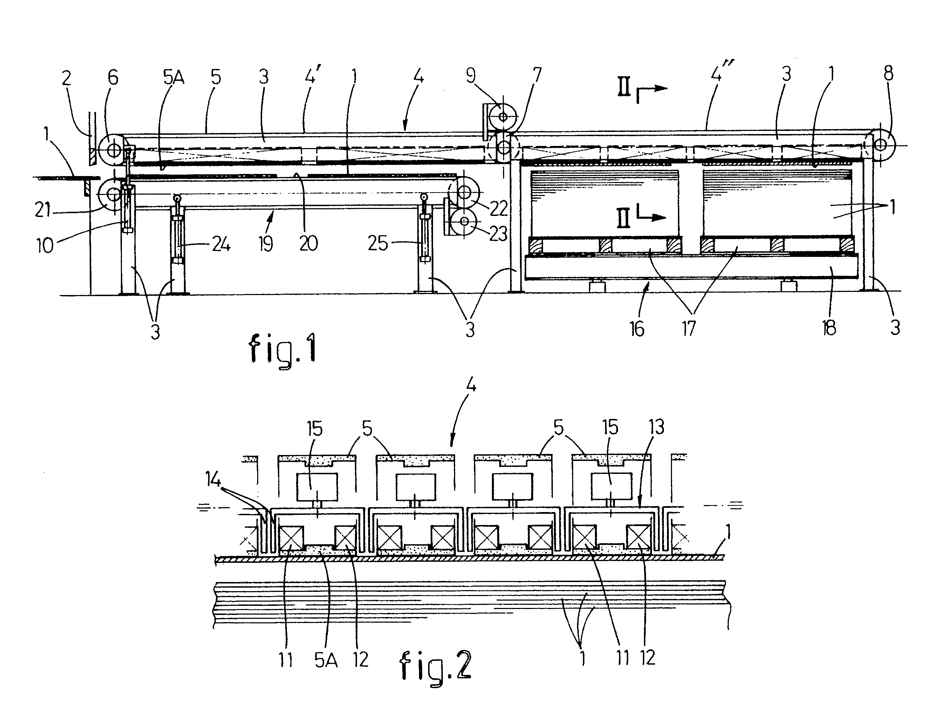

The apparatus includes a belt conveyor 4 supported by a frame 3 and comprising a plurality, for instance ten, closely spaced parallel narrow conveyor belts 5 (see fig. 2), preferably having a low friction surface. The conveyor belts 5 extend around rollers 6, 7, 8 and are driven by one or more indexing motors 9 which are controlled by a microprocessor. A first section $4'$ of the belt conveyor 4 is downwardly pivotable about the central roller 7, for which purpose the belt conveyor 4 is supported near the first roller 6 by a cylinder-piston-assembly 10 mounted to the frame 3.

The belt conveyor 4 of the apparatus further comprises magnet means, in this case consisting of magnets 11 and 12, arranged above the conveying part 5A of each conveyor belt 5 and mounted to the frame 3, for each conveyor belt 5A there being provided a plurality of magnets 11 and 12 distributed lengthwise and arranged one behind the other such that the metal sheets 1 may adhere to the whole conveying part 5A of the conveyor belts 5. For this purpose the metal sheets are magnetized through the conveyor belts 5. The magnets 11, 12 in the first section $4'$ of the conveyor 4 will generally consist of permanent magnets, but for a second section $4''$ of the belt conveyor 4 it may also be an advantage to use electromagnets 11, 12 which may be switched on and switched off for holding the metal sheets 1 and for releasing them above a deposite place respectively.

In the case shown, however, the magnets 11, 12 within the second section $4''$ of the belt conveyor 4 consist also of permanent magnets. In order to release the metal sheets 1 adhering to the conveyor belts 5 each conveyor belt 5 is provided with a plurality of lengthwise spaced push-off means 13 each comprising two vertical legs 14 disposed on both sides of the respective conveyor belt 5 and being interconnected and adjustable in vertical height between a retracted position (see fig. 2) in which the lower end of the legs 14 are above the underface of the conveying part 5A of the conveyor belts 5, and an extended position in which the legs 14 project a distance below the underface of the conveying part 5A of the conveyor belts 5. The legs 14 of each push-off means 13 are operable by means of an adjustment unit 15 which may be actuated manually or automatically. The adjustment units 15 may be operated separately or in groups depending on the size of the metal sheet 1 to be pushed off. A group of simultaneously operable adjustment units 15 may include both adjustment units distributed along the length of one conveyor belt 5 and adjustment units of separate conveyor belts 5.

Furthermore the apparatus comprises one or more deposite places 16 which, in this case, are formed on pallets 17 that are placed on a vertically adjustable lift 18 of which the support face can be formed by the conveying part of a conveyor belt which is movable transverse to the direction of conveyance of the belt conveyor 4 and which may position empty pallets from a supply conveyor and deliver pallets loaded with a stack of metal sheets 1 to a further conveyor adapted to feed the pallets 17 together with stacks of metal sheets 1 to a further tooling apparatus, for example. The lift 18 may be controlled such that the upper side of the stack of metal sheets 1 on the pallet 17 are kept on a constant level below the conveying part 5A of the conveyor belt 5 so that the height of drop of each metal sheet 1 upon release from the conveying part 5A of the conveyor belts 5 is always the same.

The apparatus further includes another belt conveyor 19 having a plurality of conveyor belts 20 which are guided around rollers 21 and 22 and are driven by means of an electric indexing motor 23. The conveyor belts 20 are arranged closely to the support face of the plate shear 2 near the roller 21 so that the cut metal sheets of the shear 2 may be received by the conveyor belts 20. The belt conveyor 19 is supported near both of its ends by independently adjustable cylinder-piston-assemblies 24, 25 which are supported by the frame 3. By means of the cylinder-piston-assemblies 24 and 25 the belt conveyor 19 is adjustable between a horizontal position for receiving the metal sheets 1 from the shear 2 and a pivotable position inclining upwardly from the roller 21, in which pivotable position the belt conveyor 19 may deliver its metal sheets 1 to the lower conveying part 5A of the conveyor belts 5 in the section 4′ of the belt conveyor 4 which, in that case, is pivoted downwardly by means of the cylinder-piston-assembly 10. When the belt conveyors 4 and 19 are contacted with each other through the interposed metal sheets 1, the belt conveyor 4 will take over the metal sheets 1 of the belt conveyor 19 by means of the magnet force exerted by the magnets 11 and 12. It is noted that the belt conveyor 19, in order to hold the metal sheets 1 in position, may be provided with magnets which, in the case of permanent magnets, will have to be weaker than the magnets 11, 12 of the belt conveyor 4.

The operation of the apparatus described herein before is as follows.

A metal sheet strip, and in some cases a plurality of adjacent metal sheet strips, comes with a certain speed from the shear 2 up to the conveyor belts 20 of the lower belt conveyor 19. When the desired length of the metal sheet 1 to be cut is obtained the supply stops and the shear 2 comes down to cut the metal sheet 1. The lower conveyor belts 20 pull the cut metal sheet thereon, possibly by means of their magnets, and index the metal sheets in the right position. This process continues until the lower conveyor 19 is loaded with a maximum number of metal sheets 1. Then the conveyors 4 and 19 approach each other simultaneously with a cutting action of the shear 2, and the metal sheets are taken over by the upper belt conveyor 4 to transport them further. In this manner the takeover frequency of the upper belt conveyor 4 is minimized.

While the lower conveyor 19 is then filled with new metal sheets 1, the metal sheets delivered to the belt conveyor 4 are conveyed in the direction to the deposite place 16. As the movement of the belt conveyor 4 is independent of that of the belt conveyor 19, the metal sheets 1 can be deposited on any place. In this case the two pallets 17 are more closely spaced than the spacing of the metal sheets 1, so that, for example, first the front metal sheet is deposited on the stack on the right side of the drawing, whereafter the conveyor belts 5 are moved slightly further until the second metal sheet 1 has arrived above the stack on the left side of the drawing and then it can be deposited on the respective stack by means of the push-off means 13.

Of course it is not necessary to form two stacks at the same time. It is also possible to create one stack and, possibly, reserve on another lift a stack for rejected metal sheets. These metal sheets 1 which should be rejected could be recognized automatically or by an operator which then gives a signal that the respective metal sheet 1 should be conveyed up to the stack of rejected metal sheets.

When in the embodiment shown by way of example the stacks on the pallets 17 have reached their maximum height the conveyor of the lift 18 may be actuated and the filled pallets may be delivered to another conveyor, whereafter new empty pallets 17 may be supplied and may be loaded then with a stack of metal sheets 1.

The invention is not restricted to the embodiment shown in the drawing and described herein before by way of example, which can be varied in different manners within the scope of the invention. Then it would be possible to arrange the lower conveyor 19 in a fixed manner, and to shorten the first section 4′ of the belt conveyor 4 such that the discharge end of the lower conveyor 19 directly connects to the front supply end of the upper belt conveyor 4 so as to enable the metal sheets to be transferred one-by-one from the first to the second conveyor. In this case the lower conveyor 19 is primarily intended to prevent the metal sheets delivered by the plate shear from falling down by the force of the upper shear knife. The drives of both conveyors 4 and 19 could be coupled or could be combined in this case.

## Claims

1. Apparatus for conveying and depositing articles (1), in particular metal sheets, comprising a conveyor (4) supported by a frame (3) and having a conveying part (5A) for conveying articles supplied thereto and, at a lower level than the conveying part (5A), a deposite place for receiving articles delivered by the conveyor (4), **characterized** in that the conveyor (4) includes magnet means (11, 12) to cause the articles (1) to adhere to the underside of the conveyor (4) in the conveying part (5A) thereof, and means for releasing the articles (1) from the conveyor (4) above the deposite place.

2. Apparatus according to claim 1, wherein the conveyor (4) comprises a belt conveyor having at least one endless conveyor belt (5).

3. Apparatus according to claim 2, wherein the magnet means consist of magnets (11, 12) mounted to the frame and being situated above the conveying part (5A) of the belt conveyor (4).

4. Apparatus according to one of claims 1-3, wherein the means for releasing the articles (1) from the conveyor (4) above the deposite place (16) comprise switching means for switching-off the magnet means (11, 12) constructed as switchable magnets and being situated above the deposite place.

5. Apparatus according to one of claims 1-3, wherein the means for releasing the articles (1) from the conveyor (4) above the deposite place consist of push-off means (13) which are displaceable between a retracted position above the conveying part (5A) of the conveyor and an extended position in which the push-off means (13) project below the conveying part.

6. Apparatus according to claim 5, wherein the push-off means (13, 14) are mounted to the frame (3) of the conveyor (4) on both sides of the conveyor belt (5).

7. Apparatus according to one of claims 2-6, comprising a plurality of parallel narrow conveyor belts (5) being aligned transverse to the direction of conveyance.

8. Apparatus according to one of the preceding claims, wherein the deposite place (16) is formed on a vertically adjustable lift (18) preferably including a conveying means, in particular a belt conveyor, which is movable transverse to the direction of conveyance.

9. Apparatus according to claim 8, wherein the height of the deposite place (16) is controllable in dependence on the height of the stack of articles (1) thereon.

10. Apparatus according one of claims 2-9, comprising a further belt conveyor (19) including a conveyor belt (20) having its own drive (23) and cooperating with said first belt conveyor (4) such that articles are allowed to be transferred from one belt conveyor (19; 4) to the other.

11. Apparatus according to claim 10, wherein the further belt conveyor (19) is arranged at least partially under said belt conveyor (4) having magnet means (11, 12) and at least one of the belt conveyors (4, 19) being adjustable in vertical direction such that the upper conveying part of the lower belt conveyor (19) is allowed to contact the lower conveying part of the upper belt conveyor (4) having magnet means (11, 12).

fig.1

fig.2